Europäisches Patentamt

(19) European Patent Office

Office européen des brevets

(11) Publication number: **0 002 345**
**B1**

(12) **EUROPEAN PATENT SPECIFICATION**

(45) Date of publication of patent specification: **17.03.82**

(21) Application number: **78300675.2**

(22) Date of filing: **28.11.78**

(51) Int. Cl.³: **D 01 F 6/30, C 08 L 23/32**

(54) **A composition comprising a neutralised sulfonated elastomeric polymer, a process of forming a fibre from this polymer and the fibre so produced.**

(30) Priority: **29.11.77 US 855730**

(43) Date of publication of application:
**13.06.79 Bulletin 79/12**

(45) Publication of the grant of the patent:
**17.03.82 Bulletin 82/11**

(84) Designated Contracting States:
**BE DE FR GB NL**

(56) References cited:
**DE - A - 1 669 431**
**FR - A - 2 068 149**
**US - A - 2 752 317**
**US - A - 3 079 218**
**US - A - 3 642 728**
**US - A - 3 836 511**

(73) Proprietor: **Exxon Research and Engineering
Company**
**P.O.Box 390 200 Park Avenue**
**Florham Park New Jersey 07932 (US)**

(72) Inventor: **Lundberg, Robert Dean**
**4 Brian Drive**
**Bridgewater New Jersey (US)**
Inventor: **Makowski, Henry Stanislaus**
**2045 Winding Brook Way**
**Scotch Plains New Jersey (US)**

(74) Representative: **Field, Roger Norton et al,**
**Hanover Court 5 Hanover Square**
**London W1R OHQ (GB)**

Courier Press, Leamington Spa, England.

# A composition comprising a neutralised sulphonated elastomeric polymer, a process of forming a fibre from this polymer and the fibre so produced

This present invention relates to sulphonated elastomeric polymer fibres which are readily formable on conventionally designed fibre forming equipment by an improved process into high performance elastomeric fibres having superior dimensional stability, improved holding power, and good chemical resistance to a broad class of solvents.

Compositions comprising neutralised sulphonated elastomeric polymers dissolved in mixed solvents are known from US Patent Specifications 3642728 and 3836511. According to this invention a composition suitable for forming an elastomeric fibre comprises

(a) a mixed solvent of 60 to 98 wt.% of an aromatic solvent and 2 to 40 wt.% of an alcohol miscible with the aromatic solvent; and

(b) a neutralised sulphonated EPDM terpolymer having 1 to 10.0 weight percent olefinic unsaturation and a Mooney viscosity at 100°C of 5 to 60 and the neutralised sulphonated terpolymer having 10 to 50 meq. sulphonated groups per 100 grams of the neutralised sulphonated EPDM, wherein at least 95% of the sulphonate groups are neutralised with a basic material the cation of which is an amine, ammonium, guanidine or iron, aluminium, antimony, lead or a metal of Groups IA, IIA, IB or IIB of the Periodic Table of Elements or a mixture thereof, said neutralised sulphonated terpolymer being dissolved in said mixed solvent at a concentration level of 5 to 50 grams per 100 ml. of said mixed solvent to form a solution, said solution having a Brookfield viscosity at 6 rpm at ambient temperature of 2 to 50 Pa.s (2000 to 50,000 cps).

The EPDM terpolymers are low unsaturated polymers having 1 to 10.0 weight percent olefinic unsaturation, preferably 2 to 8 wt.%, more preferably 3 to 7 wt.% defined according to the definition as found in ASTM—D—1418—64 and is intended to mean terpolymers containing ethylene and propylene in the backbone and a diene which provides for unsaturation in a side chain. Illustrative methods for producing these terpolymers are found in U.S. Patent 3,280,082, Btitish Patent 1,030,289 and French Patent 1,386,600. The preferred polymers contain 40 to 75 weight percent ethylene and 1 to 10 weight percent of a diene monomer, the balance of the polymer being propylene. Preferably, the polymer contains 45 to 70 weight percent ethylene, e.g. 50 weight percent and 2.6 to 6.0 weight percent diene monomer, e.g. 5.0 weight percent. The diene monomer is preferably a nonconjugated diene.

Illustrative of these nonconjugated diene monomers which may be used in the terpolymer (EPDM) are 1,4-hexadiene, dicyclopentadiene, 5-ethylidene-2-norbornene, 5-methylene-2-norbornene, 5-propenyl-2-norbornene, and methyl tetrahydroindene.

A typical EPDM is Vistalon 2504 (Exxon Chemical Co.), a terpolymer having a Mooney viscosity at 212°F of 40, and having an ethylene content of 50 weight percent and a 5-ethylidene-2-norbornene content of 5.0 weight percent. The $\overline{M}n$ of Vistalon 2504 is 47,000, the $\overline{M}v$ is 145,000 and the $\overline{M}w$ is 174,000. (The word 'Vistalon' is a registered Trade mark, at least in the United Kingdom).

Another EPDM terpolymer V—2504—20 is derived from V—2504 (Exxon Chemical Co.) by a controlled extrusion process, wherein the resultant Mooney viscosity at 100°C is 20. The $\overline{M}n$ of V—2504—20 is 26,000, the $\overline{M}v$ is 90,000, and the $\overline{M}w$ is 125,000.

Nordel 1320 (DuPont) is another terpolymer having a Mooney viscosity at 100°C of 25 and having 53 weight percent of ethylene and 3.5 weight percent of 1,4-hexadiene. (The word 'Nordel' is a registered Trade Mark, at least in the United Kingdom).

The EPDM terpolymers of this invention preferably have a number average molecular weight ($\overline{M}n$) of 10,000 to 200,000, more preferably of 15,000 to 100,000, most preferably of 20,000 to 60,000. The Mooney viscosity of the EPDM terpolymer at 100°C is 5 to 60, more preferably 10 to 50, most preferably 15 to 40. The $\overline{M}v$ of the EPDM terpolymer is preferably below 350,000 and more preferably below 300,000. The $\overline{M}w$ of the EPDM terpolymer is preferably below 500,000 and more preferably below 350,000.

In preparing the sulphonated EPDM, the EPDM terpolymer is dissolved in a non-reactive solvent such as a chlorinated aromatic hydrocarbon, a cycloaliphatic hydrocarbon, an aliphatic hydrocarbon or a chlorinated aliphatic hydrocarbon such as chlorobenzene, cyclohexane, pentane, isopentane, cyclopentane, hexane, isohexane or heptane, methylene chloride or dichloroethane. The preferred solvents are aliphatic hydrocarbons. A sulfonating agent is added to the solution of the EPDM terpolymer and non-reactive solvent at a temperature of −100°C to 100°C for 1 to 60 minutes, more preferably at room temperature for 5 to 45 minutes, and most preferably 15 to 30. Typical sulfonating agents are described in U.S. Patent 3,642,728 and 3,836,511. These sulfonating agents are an acyl sulfate, a mixture of sulfuric acid and an acid anhydride or a complex of a sulfur trioxide donor and a Lewis base containing oxygen, sulfur or phosphorus. Typical sulfur trioxide donors are $SO_3$, chlorosulfonic acid, fluorosulfonic acid. Typical Lewis bases are: dioxane, tetrahydrofuran, triethylphosphate, or tetrahydrothiophene. The most preferred sulfonation agent for this invention is an acyl sulfate selected from benzoyl, acetyl, propionyl or butyryl sulfate. The acyl sulfate can be formed *in situ* in the reaction medium or pregenerated before its addition to the reaction medium in a solvent or neat. A preferred acyl sulfate is acetyl sulfate.

2

It should be pointed out that neither the sulfonating agent nor the manner of sulfonation is critical, provided that the sulfonating method does not degrade or covalently crosslink the polymer backbone. The reaction is quenched with an aliphatic alcohol selected from methanol, ethanol, n-propanol or isopropanol, with an aromatic hydroxyl compound such as phenol, a cyclo aliphatic alcohol such as a cyclohexanol or with water. The acid form of the sulfonated EPDM terpolymer has 10 to 50 preferably 15 to 50, and more preferably 20 to 40 meq. sulfonate groups per 100 grams of terpolymer. The meq. of sulfonate groups/100 grams of polymer is determined by both titration of the polymeric sulfonic acid and Dietert Sulfur analysis. In the titration of the sulfonic acid the polymer is dissolved in solvent consisting of 95 parts by volume of toluene and 5 parts by volume of methanol at a concentration level of 50 grams per liter of solvent. The sulfonated polymer is titrated with ethanolic sodium hydroxide to an Alizarin Thymolphthalein endpoint.

The sulfonated polymer is substantially gel-free (i.e. less than 5 weight percent of the total polymer is insoluble) and hydrolytically stable. Percent gel is measured by stirring a given weight of polymer in a solvent comprised of 95 volumes of toluene-5 volumes of methanol at a concentration of 50 g/liter for 24 hours, allowing the mixture to settle, withdrawing a weighed sample of the supernatant solution and evaporating to dryness.

Hydrolytically stable means that the acid function, in this case the sulfonic acid, will not be eliminated under neutral or slightly basic conditions to a neutral moiety which is incapable of being converted to a highly ionic functionality.

Neutralization of the sulfonated EPDM is by the addition of a solution of a basic salt to the sulfonated EPDM terpolymer dissolved in the mixture of the aliphatic alcohol and non-reactive solvent. The basic salt is dissolved in water, in an aliphatic alcohol or in a binary solvent system consisting of water and an aliphatic alcohol. The cation of the basic salt is antimony, iron, aluminium, lead or metals of Groups I—A, II—A, I—B or II—B of the periodic Table of Elements, ammonium or amine derivatives or mixtures thereof. The preferred cations are zinc, magnesium, barium, sodium, potassium, calcium, and lead. The anion of the salt is selected from a carboxylic acid having from 1 to 4 carbon atoms per molecule, a carbonate, a hydroxide, or an alkoxide, and mixtures thereof. It is necessary to neutralize at least 95% of the sulfonate groups, preferably 98%, and more preferably 100%.

Useful examples of metal hydroxides are NaOH, KOH, LiOH, $Mg(OH)_2$ and $Ba(OH)_2$. The preferred neutralization agents are metal acetates and ammonium acetates. The most preferred neutralizing agent is zinc acetate.

The neutralization of the sulfonate groups of the sulfonated elastomeric polymers with an organic amine is also satisfactory due to the formation of weak ionic bonds thereby resulting in fibers having a different balance of physical properties. They can be employed in the present invention to prepare elastomeric fibers possessing different attributes.

A means of characterizing the apparent molecular weight of a polymer involves the use of melt rheological measurements. For ionic polymers, this is the preferred method since solution techniques are difficult to interpret due to the complex nature of the ionic associations. Melt rheological measurements of apparent viscosity at a controlled temperature and shear rate can be used as a measure of apparent molecular weight of an ionic polymer. Although the exact relationship between melt viscosity and apparent molecular weight for these ionic systems is not known, for the purposes of this application, the relationship will be assumed to be one of direct proportionality. Thus, in comparing two materials, which are otherwise similar in composition, the one with the higher melt viscosity will be associated with the higher apparent molecular weight.

The melt viscosities of the systems described above can be determined by the use of an Instron Capillary Rheometer. Generally, because of the high viscosities encountered, the melt viscosity measurements are made at a temperature of 200°C. and at various shear rates corresponding to crosshead speeds of from .005 in/min to 20 in/min (.127 mm/min to 508 mm/min). The apparent viscosity at 200°C. and at a shear rate of .73 $sec^{-1}$ (.005 in/min) (.127 mm/min) can be employed as a characterization parameter. A measure of the melt elasticity of a given system can also be obtained from these rheological measurements. A type of flow instability known as melt fracture is exhibited by many polymeric materials of high molecular weight. This phenomenon is shear sensitive and thus will generally exhibit itself at a given shear rate and temperature. The shear rate for the onset of melt fracture indicates the upper shear rate for processing a given material. This shear rate is used as a characterization parameter for compounds employed in extrusion processing.

The resultant neutralized sulfonated EPDM terpolymer has a viscosity at 0.73 $sec^{-1}$ at 200°C. of at least $5 \times 10^3$ Pa.s ($5 \times 10^4$ poise), more preferably of at least $1 \times 10^4$ Pa.s ($1 \times 10^5$ poise) and most preferably at least $2 \times 10^4$ Pa.s ($2 \times 10^5$ poise). Higher viscosity sulfonated elastomers can be employed, however, the solutions prepared therefrom will have substantially higher solution viscosities.

The metal sulfonate containing polymers at the higher sulfonate levels possess extremely high melt viscosities and are thereby difficult to melt process. The addition of ionic group plasticizers markedly reduces melt viscosity and frequently enhances physical properties.

These ionic or preferential plasticizers are selected from carboxylic acids having 5 to 30 carbon atoms, more preferably 8 to 22 carbon atoms per molecule, or basic salts of these carboxylic acids wherein the metal ion of the basic salt is selected from aluminium, iron, antimony, lead or Groups I—A, II—A, I—B or II—B of the Periodic Table of Elements and mixtures thereof. The carboxylic acids are selected from lauric, myristic, palimitic, or stearic acids and mixtures thereof. The basic salts of these carboxylic acids include zinc stearate, magnesium stearate or zinc laurate.

The preferential plasticizer is incorporated into the neutralized sulfonated EPDM terpolymer at at least 3 parts by weight, for example up to 60 parts by weight based on 100 parts by weight of the sulfonated polymer, more preferably at 5 to 40, and most preferably at 7 to 25 parts by weight per 100 parts by weight of sulphonated EPDM. The metallic salt of the fatty acid can also be used as neutralizing agent. In the case of the neutralizing agent and plasticizer being the identical chemical species, additional metallic salt is added over the required levels of neutralization. Alternatively, other preferential plasticizers are selected from organic esters, phenols, trialkyl phosphates, alcohols, amines, amides, ammonium and amine salts of carboxylic acids and mixtures thereof. The preferred plasticizers are selected from fatty acids or metallic salts of fatty acids and mixtures thereof. The resultant neutralized sulfonated EPDM terpolymer with preferential plasticizer is isolated from the solution by conventional steam stripping and filtration.

The isolated dried crumb of the neutralized sulfonated elastomeric polymer, which can be also plasticized, is dissolved in a mixed solvent to form a solution for the subsequent process of forming the fibers. The concentration of the neutralized sulfonated EPDM in the solution is 5 to 50 grams per hundred ml. of the mixed solvent, more preferably 10 to 25, and most preferably 15 to 25, wherein the resultant Brookfield viscosities of the solutions at 6 rpm at room temperature is 2 to 50 Pa.s (2,000 to 50,000 cps) and most preferably 5 to 25 Pa.s (5,000 to 25,000). The mixed solvent is formed from a backbone solvent which usually solvates the backbone of the sulfonated elastomeric polymer and a polar cosolvent (or simply polar solvent) which usually solvates the ionic acid groups of the sulfonated elastomeric polymer, wherein the backbone and polar cosolvents should be mutually miscible with each other. The backbone solvent is an aromatic, solvent such as toluene, benzene, or xylene, or mixtures thereof. The polar cosolvent is an alcohol, for example an aliphatic or cycloaliphatic alcohol, such as methanol, ethanol, isopropanol, n-propanol, n-butanol, isobutanol, pentanol, isopentanol, isohexanol, n-hexanol, methyl cyclohexanol or cyclohexanol or mixtures thereof. The selection of these respective solvents and their relative amounts is an important aspect of this improved process for preparing the fibers. The aromatic solvent which comprises the major portion of the polymer solution is one which primarily solvates the polymer backbone and therefore can be termed the backbone solvent. It is a requirement that the polymer backbone prior to sulfonation be soluble in the backbone solvent. Solubility is determined by dissolution of 1 gram of polymer in 100 ml. of solvent. If 95% or more of the polymer dissolves, the polymer is deemed to be soluble in that solvent. For example, if 1 gram of EPDM is tested for solubility in toluene, it is observed that the polymer substantially dissolves, therefore, toluene represents an acceptable solvent for this polymer. Upon sulfonation and neutralization, it is generally observed that the sulfonated, neutralized polymer will not dissolve in a hydrocarbon solvent or mixture of such solvents or if dissolution occurs the solution viscosities will be so high at the desired polymer level that the polymer solutions are extremely difficult to handle.

We have observed that the addition of a suitable polar cosolvent will permit the dissolution of these sulfonated, neutralized polymers to yield solutions which are substantially gel free and which possess solution viscosities in a very desirable range for spinning fibers. Furthermore, such solutions can contain high solids levels, for example, up to and exceeding 15 weight percent Sulfo EPDM which is extremely desirable in such spinning operations.

It is apparent that the type and level of the polar solvent is very important in the practice of this invention. First, it must contain a suitable polar function i.e. the alcohol group. Second, this polar solvent must interact primarily with the ionic groups of the sulfonated polymer so as to dissociate them to a substantial extent. Third, this polar solvent must be miscible with the backbone solvent at the levels employed in the spinning process, i.e., it should not comprise a second phase which is immiscible with the primary solvent. This latter requirement can be established simply by adding the candidate polar solvent to the backbone solvent at the desired level and determining that the solvent pair is indeed miscible.

The amount of polar cosolvent required depends on the amount of polymer to be dissolved, its sulfonate content, the choice of backbone solvent employed, and on the structure of the polar solvent. Generally, the polar solvent will be present at levels ranging from 2 weight percent (based on the combined weights of polar cosolvent and backbone solvent) to 40 weight percent, preferably from 3 percent to 20 percent and most preferably from 4 percent to 15 percent.

An excellent solvent combination is a combination of xylene and methanol with the former being a backbone solvent and the latter the polar solvent. If insufficient methanol is added, the sulfonated polymer will not dissolve. If too much methanol is incorporated then it can act as a precipitant for the polymer backbone. Therefore, for example, a 50/50 xylene-methanol combination should not be employed because in the case of Sulfo EPDM it will not form a true solution in this mixture. On the other hand, the use of other alcohols such as hexanol-1 permits their incorporation at a relatively higher level because they are more compatible with the polymer backbone.

Methanol is a highly preferred polar cosolvent because it interacts very strongly with the ionic groups and decreases polymer solution viscosity most effectively even when present at low levels.

**0 002 345**

Also, it is inexpensive and readily available. Other alcohols such as ethanol and isopropanol are also preferred polar solvents.

Even the combination of a backbone solvent and a preferred polar solvent may not be an acceptable solvent combination. For example, the selection of hexane and methanol is not a desirable pair because of the limited miscibility of methanol with hexane. Therefore, those skilled in the art, who follow these teachings, can readily determine the appropriate solvent mixtures that meet the requirements delineated above. Specific working examples will be provided below.

Additionally, various additives (which term excludes preferential plasticisers) can be incorporated into the compositions in a concentration of less than 60 parts by weight per 100 parts by weight of neutralized sulphonated EPDM for modification of various properties, wherein the additives are a wax, a metallic hydroxide, a filler, an oil, a pigment, a stabilizer or a mixture thereof. If the additive is a liquid, it can be ideally added to the cement of the neutralized sulfonated EPDM prior to isolation by steam stripping. If the additive is a solid, it can be added to a crumb of the sulfonated EPDM by compound in an intensive mixing device such as Banbury, a Farrell Continuous Mixer, a compounding extruder, or on a two-roll mill. (The word "Farrell" is a registered Trade Mark at least in the United Kingdom).

For example, a filler can be incorporated into the composition for modification of the modulus of the fiber as well as altering the surface shine.

The fillers which may be added to the compositions of the present invention are talc, ground calcium carbonate, water precipitated calcium carbonate, delaminated, calcined or hydrated clays or a mixture thereof. These fillers may be incorporated into the blend composition at a concentration of 1 to 50 preferably at 1 to 25 and more preferably at 2 to 10 parts by weight per 100 parts of the sulfonated polymer.

These fillers must be selected so as to be properly suspended in the polymer solution prior to spinning the elastomeric fibers. Therefore, the particle size must be such that the particles do not readily settle out during the solution spinning process. Therefore, the preferred filler size is from $0.03—10 \times 10^{-3}$ mm (.03 to 10 microns). Some typical fillers are shown in Table I.

5

TABLE I

| Filler | Code No. | Oil Absorption grams of oil/100 grams of filler | Specific Gravity | Avg. Particle Size mm. | pH |
|---|---|---|---|---|---|
| calcium carbonate ground | Atomite | 15 | 2.71 | | 9.3 |
| calcium carbonate precipitated | Purecal U | 35 | 2.65 | $0.03—.04 \times 10^{-3}$ (.03—.04 microns) | 9.3 |
| delaminated clay | Polyfil DL | 30 | 2.61 | $4.5 \times 10^{-3}$ (4.5 microns) | 6.5—7.5 |
| hydrated clay | Suprex | | 2.6 | $2 \times 10^{-3}$ (2 microns) | 4.0 |
| calcined clay | Icecup K | 50—55 | 2.63 | $1 \times 10^{-3}$ (1 microns) | 5.0—6.0 |
| magnesium silicate (talc) | Mistron Vapor | 60—70 | 2.75 | $2 \times 10^{-3}$ (2 microns) | 9.0—7.5 |

(The word 'Mistron' is a registered Trade Mark at least in the United Kingdom).

**0 002 345**

The oils which may be added to the compositions of the present invention modify the fiber and impart a rubbery-like feel, the oils being non-polar process oils having less than about 2 weight percent polar type compounds as measured by molecular type clay gel analysis. These oils are selected from paraffinics ASTM Type 104B as defined in ASTM—D—2226—70, aromatics ASTM Type 102 or naphthenics ASTM Type 104A, wherein the oil has a flash point by the Cleveland open cup of at least 350°F., (176.7°C), a pour point of less than 40°F (4.4°C), a viscosity of 70 to 3000 s.s.u.'s at 100°F (37.8°C) and a number average molecular weight of 300 to 1000, and more preferably 300 to 750. The preferred process oils are paraffinics. Table II illustrates typical oils encompassed by the scope of this invention.

The oils may be incorporated into the blend composition at a concentration level of up to 60 preferably up to 40, and more preferably at up to 25 parts by weight per 100 parts of the sulfonated polymer.

TABLE II

| Type Oil | Oil Code No. | Viscosity S.S.U. | $M_n$ | % Polars | % Aromatic | % Saturates |
|---|---|---|---|---|---|---|
| Paraffinic | Sunpar 115 | 155 | 400 | 0.3 | 12.7 | 87.0 |
| Paraffinic | Sunpar 180 | 750 | 570 | 0.7 | 17.0 | 82.3 |
| Paraffinic | Sunpar 2280 | 2907 | 720 | 1.5 | 22.0 | 76.5 |
| Aromatic | Flexon 340 | 120 | — | 1.3 | 70.3 | 28.4 |
| Naphthenic | Flexon 765 | 505 | — | 0.9 | 20.8 | 78.3 |

(The word 'Flexon' is a Registered Trade Mark, at least in the United Kingdom).

A lubricant can be employed in the blend composition at a concentration level of up to 20 more preferably up to 15 parts by weight based on 100 parts of the neutralized sulfonated EPDM. The lubricants of the present invention may be non-polar paraffinic hydrocarbon waxes having a softening point of 135°F to 220°F (57.2°C to 104.4°C), preferably 150°F to 200°F (65.6°C to 93.3°C), wherein the wax has a number average molecular weight of 1000 to 4000, more preferably 1500 to 3500, and less than 2 weight percent polar constituents. These internal, external lubricants modify the rheological properties of the composition, improve the processability in forming the elastomeric article and impart a shine or gloss to the elastomeric article. Additionally, amorphous polypropylene can be used as a lubricant. These lubricants can be useful but are not essential to the solution spinning procedure employed.

Zinc oxide can be incorporated into the composition as a whitening pigment as well as a means for improving the ionic bonding force between the sulfonate groups in the sulfonated elastomeric polymer. The zinc oxide may be incorporated into the composition at a concentration level of up to 10, preferably up to 5 parts by weight based on 100 parts of sulfonated polymer. Alternatively, a Rutile or Anatase titanium dioxide can be employed as a whitening pigment.

The solution of the neutralized sulfonated elastomeric polymer is extruded through a suitable fiber forming die into the resultant fiber by either a conventional wet spinning or dry spinning method. The dry spinning process is preferred. For example, the solution is fed through a spinner having a plurality of orifices which are submerged in a water coagulating bath. The formed fibers after passing through the water bath are passed to a rubber glass godet, through a heated glycerine stretch-batch, over a draw godet and onto a Winder. Alternatively, in the dry process, the spun fibers extruding from the spinner can flow vertically downwardly through heated air and be collected on a Winder.

Example I

The preparation of a suitable sulfonated EPDM was effected by: dissolution of 200 g. of an EPDM (V—2504 from Exxon Chemical Corp. with a Mooney viscosity of about 40 measured at 212°F.) in 4000 ml. of chlorobenzene. A 1.0 molar acetyl sulfate solution in chlorobenzene was generated through the addition of concentrated sulfuric acid to acetic anhydride in chlorobenzene at below 10°C. at an acetic anhydride/$H_2SO_4$ molar ratio of 4.0. When the EPDM was dissolved 80 ml. of 1.0 molar acetyl sulfate in chlorobenzene (80 mmoles) was added and the sulfonation reaction conducted at a temperature of 25 to 30°C. After 30 minutes any further reaction was terminated by the addition of about 80 ml. of methanol containing abot 1.0 g of Antioxidant 2246. The polymer solution was then neutralized with magnesium stearate at a level of 16 parts of magnesium stearate per 100 g of EPDM.

7

The polymer was then isolated by steam stripping and dried overnight in a vacuum oven. The resulting polymer was found by sulfur analysis to contain 0.89 weight percent sulfur.

Example II

This example describes the dissolution of the polymer sample from Example I in a suitable mixed solvent, the solution spinning of elastomeric fibers and the properties of the resulting fibers.

A. Procedures

1. Preparation of Solutions For Spinning

Solutions were prepared by dissolving the isolated sulfonated polymer in a 95:5 mixture of xylene and methanol (by volume). Sealed glass jars containing solvent and polymer were placed in a water bath at 37°C., shaken for 18 hours and then deaerated by placing the polymer and open container in a vacuum desiccator and applying a vacuum with a water aspirator. Solutions containing 8 to 15% of polymer were prepared.

2. Dry Spinning

a. *Preliminary Experiments*

Preliminary experiments to determine the feasibility of dry-spinning fibers of this experimental polymer and to produce short lengths of filaments for study were made as follows: a sample of polymer solution was prepared as described above and fibers were formed by immersing the end of a glass rod in the solution and then slowly lifting the rod into air at room temperature for about 3 feet to form a fiber between the rod and solution. These fibers were immediately attached to metal rods about 3 feet apart on a ring stand. The ring stand with fibers was then placed in an air-circulating oven and the remaining solvent was removed by heating the fibers to 150°C.

b. *Pilot-Scale Dry Spinning*

Polymer solutions were dry spun in a 16-foot dry-spinning tower. The polymer solution was charged to a small stainless-steel reservoir (125 ml.) fitted with a spinneret, and the solution was forced through the spinneret by applying nitrogen pressure to the reservoir. Two spinnerets had a single orifice 10 mils in diameter. A 250-mesh stainless-steel screen was located in the spinneret holder against the back surface of the spinneret. The filaments passed from the spinneret located at the top of the tower through the 16-foot tower to a surface driver about 5 feet below the base of the tower.

3. Measurement of Fiber properties

a. *Denier*

The denier of the fibers was determined by weighing a 90-cm length on an analytical balance and calculating the weight in grams of 9,000 m.

b. *Tensile Properties*

The tensile properties of the fibers were determined from measurements made on a Model TMS Instron Tester following the general procedures outlined in ASTM Method D—2731—68T "Elastic Properties of Elastomeric Yarns" and in DuPont's Technical Information Bulletin L—17 dated January, 1965. The gauge length was 2 inches, the crosshead speed was 20 in/min, and the chart speed was 20 in/min.

4. Preliminary Spinning Trials

A preliminary dry spinning experiment was made with a solution containing about 15% by weight of the sample described in Example I (Sample I—A). Fibers were formed in this experiment by simply immersing the end of a spatula in the solution and then slowly drawing it away in air at room temperature to form a filament about 3 feet long. Filaments were easily formed by this procedure and dried sufficiently in air at room temperature to allow handling.

The fibers formed by the above procedure were elongated about 50% and then mounted by attaching them with tape to metal rods spaced about 3 feet apart on a ring stand. The rack with fibers was then placed in an air-circulating oven where the fibers were heated from 25°C. to 150°C. over a 45-minute period. The mounted fibers were then recovered from the oven and allowed to cool under tension. The tensile properties of fibers formed by this procedure are given below in Table III.

TABLE III

Tensile properties of fibers of sample I—A

| Properties | Sample I—A |
|---|---|
| Filament denier | 225 |
| Tenacity, g/d | 0.52 |
| Elongation at break, % | 840 |
| Stress decay, %, at<br>100% extension | 21 |
| Holding power, g/d, at<br>100% extension<br>200% extension | 0.028<br>0.033 |
| Set at 100% extension, % | 3.9 |

5. Pilot-Scale Dry-Spinning Experiment

Monofilaments were dry spun from two solutions containing about 9% and about 10% of the polymer of Example I dissolved in an xylene-methanol mixture. These solutions (about 5 Pa.s (5,000 cps) and 14 Pa.s (14,000 cps) viscosity, respectively) were dry spun from a 125-ml spinning pot fitted with a spinneret having a single 12-mil orifice. Monofilament (Sample I—B) spun from the solution having a viscosity of about 5 Pa.s (5,000 cps) was spun through the tower with an air temperature of 240°C. and collected at a take-up rate of 62 ft/min. The monofilament (Sample I—C) spun from the solution having a viscosity of about 14 Pa.s (14,000 cps) was spun through the tower with an air temperature of 230°C. and collected at a take-up rate of 118 ft/min. The nitrogen pressure to the spinning pot was about 40 psig in both experiments. No spin finish was applied to the monofilament in either experiment. The properties of the monofilaments are reported in Table IV. No difficulties were encountered in these spinning runs.

TABLE IV

Properties of monofilament of sulfonated
elastomeric polymer prepared in pilot equipment

| Properties | Fiber Samples | | |
|---|---|---|---|
| | I—A | I—B | I—C |
| Filament denier | 225 | 190 | 55 |
| Tenacity, g/d | 0.52 | 0.44 | 0.55 |
| Elongation at break, % | 840 | 908 | 715 |
| Stress decay, %, at<br>50% extension<br>100% extension<br>200% extesion | —<br>21<br>— | 10<br>19<br>21 | —<br>—<br>— |
| Holding power, g/d, at<br>100% extension<br>200% extension | 0.058<br>0.10 | —<br>— | —<br>— |
| Set at 100% extension, % | 3.9 | — | — |
| Boil-off Shrinkage, % | — | 9.5 | — |

9

## Example III

Neutralized sulfonated EPDM terpolymers having either 30 or 40 meq. $SO_3H/100$ g polymer groups were prepared according to the method described in Example I from Vistalon 2504, wherein the acid form of the sulfonated polymers were neutralized with the following neutralizing agents as listed in Table V wherein the neutralized sulfonated EPDM terpolymers were subsequently isolated from the cement by steam stripping and drying. In neutralization of the polymer by a metal stearate, stearic acid is liberated and retained with the polymer where it can act as a plasticizer. It is expected that the amount of stearic acid liberated will be equivalent to the amount of sulfonic acid present and is indicated as "estimated amount". With the neutralization agent, such as metal acetates, the evolved acetic acid is removed in the workup.

### TABLE V

| Sample | $SO_3H$ Content Meq/100 g Polymer | Meq. of Neutralizing Agent | Type of Neutralizing Agent | Meq. of* Plasticizer | Type of Plasticizer |
|---|---|---|---|---|---|
| A | 30 | 60 | Magnesium stearate | 30 | Stearic Acid |
| B | 40 | 80 | Magnesium stearate | 40 | Stearic Acid |
| C | 30 | 60 | Magnesium acetate | none | none |
| D | 30 | 60 | Barium acetate | none | none |
| E | 40 | 80 | Magnesium stearate | 40 | Stearic Acid |

*Estimated amounts

## Example IV

Solutions of the four neutralized sulfonated EPDM terpolymers III—A—D were made by dissolving each of them in three different mixed solvent systems which were formed from xylene and methanol at volume percent ratios of 92/8; 93.5/6.5 and 95/5 at a concentration of 10 grams of terpolymer per 100 ml. of mixed solvent. The resultant Brookfield viscosities for the four neutralized sulfonated EPDM terpolymers in the three solvent systems are listed in Table VI.

### TABLE VI

Viscosity and appearance of solutions

| Sample | Xylene/methanol ratio, vol % | Viscosity, Pa.s | Appearance of Solution |
|---|---|---|---|
| A | 92/8[a] | 4 (4,000 cps) | Slightly yellow |
|   | 93.5/6.5 | 2 (2,000 cps) | Slightly yellow |
|   | 95/5 | 1.5 (1,500 cps) | Slightly yellow |
| B | 92/8 | 6 (6,000 cps) | Murky |
|   | 93.5/6.5 | 5 (5,000 cps) | Murky |
|   | 95/5[a] | 7 (7,000 cps) | Slightly yellow |
| C | 92/8 | 3 (3,000 cps) | Slightly yellow |
|   | 93.5/6.5[a] | 3 (3,000 cps) | Slightly yellow |
|   | 95/5 | 3 (3,000 cps) | Slightly yellow |
| D | 92/8[a] | 10 (10,000 cps) | Slightly yellow |
|   | 93.5/6.5 | 14 (14,000 cps) | Murky |
|   | 95/5 | >180 (>180,000 cps) | Murky |

## Example V

Based on the solution viscosities of Example IV and the appearance of the solutions, one solution of each composition of Example IV (A—D) was dry spun into fibers by charging each solution into a 500 ml. stainless-steel feed reservoir and forcing the solution by nitrogen pressure to a Zenith metering pump (0.29 cm³/rer.) From the pump, the solution was forced through a screen pack (40/250/40) and then through a spinner having 12 orifices, wherein each orifice had a diameter of 15.6 mils. The filaments passed from the spinner located near the top of the tower through a 16 foot tower to a surface driven Winder located 5 feet below the base of the tower.

The fibers made from compositions A—D of Example III were tested for tenacity, g/d; elongation at break, %; tensile factor; secant modulus g/d; and stress decay, %, wherein the results are summarized in Table VII.

### TABLE VII

#### Tensile properties of fibers

|  | III—A | III—B | III—C | III—D |
|---|---|---|---|---|
| Xylene/methanol, vol. % | 92/8 | 95/5 | 93.5/6.5 | 92/8 |
| Brookfield viscosity, Pa.s | 4 (4,000 cps) | 7 (7,000 cps) | 3 (3,000 cps) | 10 (10,000 cps) |
| Filament denier, relaxed | 150 | 157 | 105 | 129 |
| Tenacity, g/d | 0.25 | 0.41 | 0.15 | 0.12 |
| Elongation at break, % | 750 | 742 | 797 | 733 |
| Tensile factor | 9.1 | 15.0 | 5.3 | 4.4 |
| Secant modulus, g/d at | | | | |
| 100% elongation | 0.025 | 0.036 | 0.020 | 0.018 |
| 200% elongation | 0.019 | 0.024 | 0.015 | 0.014 |
| 300% elongation | 0.017 | 0.023 | 0.015 | 0.013 |
| Stress decay (%) at | | | | |
| 300% elongation | 23 | 26 | 17 | 21 |

### Example VI

A solution of the neutralized sulfonated EPDM terpolymer (III—E) was made by dissolving the sulfonated terpolymer in a mixed solvent of xylene/methanol 95/5 vol. % at a concentration level of 10 grams of terpolymer per 100 ml. of mixed solvent. The Brookfield viscosity at room temperature at rpm's for V—E 2.5 Pa.s (2,500 cps).

The solution was divided into three portions of 100 ml. each. One portion was retained as a control (VI—A). Magnesium hydroxide was added to the other two portions. For sample VI—B, 0.1% magnesium hydroxide based on the weight of the terpolymer was added. For sample VI—C, 0.2% magnesium hydroxide based on the weight of the terpolymer was added. The solutions of VI—B and VI—C were shaken overnight and allowed to stand for 48 hours. The three solutions were then formed into fibers by extruding through a hypodermic syringe into air at room temperature and slowly drawing the formed fiber away from the needle. These fibers were immediately attached to vertically aligned metal rods about 3 feet apart from each other and dried in an air circulating oven at 150°C. Table VIII summarizes the results of the effect of the magnesium hydroxide on the tensile properties of the fibers.

### TABLE VIII

#### Effect of Mg(OH₂) on tensile properties of fibers

|  | VI—A | VI—B | VI—C |
|---|---|---|---|
| Mg(OH)₂ concentration on polymer, % | 0 | 0.1 | 0.2 |
| Brookfield viscosity, Pa.s | 3 (3,000 cps) | 2.65 (2,650 cps) | 2.05 (2,050 cps) |
| Denier | 97.5 | 108 | 120 |
| Tenacity, g/d | 0.35 | 0.35 | 0.29 |
| Elongation at break, % | 600 | 620 | 430 |

# 0 002 345

The effect of the magnesium hydroxide is to react to some degree with the stearic acid plasticizer and thereby give a somewhat tighter ionic crosslink as shown in the 3rd sample where the elongation is reduced to 430%. This is one approach which can be employed to alter the stress-strain characteristics of these fibers.

It is emphasized in this application that the solution viscosities of the mixed solvent-ionic polymer solutions cover a range of 2 to 50 Pa.s (2000 to 50,000 centipoises) when measured at ambient temperature. Obviously, these viscosity values for a given polymer solution can be altered simply by changing the temperature of the solution. Often it may not be desirable to employ too hot a temperature for the spinning operation due to solvent volatility and therefore a preferred range is from about 25°C to about 150°C depending on the system. Adjustment of temperature, polymer concentration, solvent system and other conditions are readily effected by one skilled in the art.

## Claims

1. A composition suitable for forming an elastomeric fibre, which comprises:

(a) a mixed solvent of 60 to 98 wt.% of an aromatic solvent and 2 to 40 wt.% of an alcohol miscible with the aromatic solvent; and

(b) a neutralised sulphonated EPDM terpolymer having 1 to 10.0 weight percent olefinic unsaturation and a Mooney viscosity at 100°C of 5 to 60 and the neutralised sulphonated terpolymer having 10 to 50 meq. sulphonate groups per 100 grams of the neutralised sulphonated EPDM, wherein at least 95% of the sulphonate groups are neutralised with a basic material the cation of which is an amine, an ammonium compound, guanidine or contains a cation of iron, aluminium, antimony, lead or a metal of Groups IA, IIA, IB or IIB of the Periodic Table of Elements or a mixture thereof, said neutralised sulphonated terpolymer being dissolved in said mixed solvent at a concentration level of 5 to 50 grams per 100 ml. of said mixed solvent to form a solution, said solution having a Brookfield viscosity at 6 rpm at ambient temperature of 2 to 50 Pa.s (2000 to 50,000 cps).

2. A composition according to claim 1, which includes an ionic plasticizer at a concentration level of at least three parts by weight based on 100 parts by weight of said neutralised sulphonated EPDM.

3. A composition according to either of the preceding claims, which includes an additive at a concentration level of less than 60 parts by weight based on 100 parts by weight of said neutralised sulphonated EPDM, wherein said additive is a metal hydroxide, a filler, a wax, an oil, a pigment, a stabilizer or a mixture thereof provided said additive is not a preferential plasticizer.

4. A composition according to claim 3, wherein said additive is an oil, wax, filler, pigment, a metallic hydroxide, a stabilizer or a mixture thereof.

5. A composition according to any one of the preceding claims, wherein the alcohol component of the solvent is an aliphatic or cycloaliphatic alcohol.

6. A composition according to any one of the preceding claims wherein said aromatic solvent is an aromatic hydrocarbon.

7. A process for forming a fibre by passing a solution through a spinneret having a plurality of orifices, wherein said solution is the composition according to any one of the preceding claims.

8. A process according to claim 7, wherein the viscosity of the solution is 5 to 25 Pa.s (5000 to 25,000 cps).

9. An elastomeric fibre having a tenacity of at least 0.12 grams/denier, which comprises a sulphonated EPDM terpolymer having 10 to 50 meq. sulphonate groups per 100 grams of said sulphonated elastomeric polymer, at least 95% of said sulphonate groups being neutralised with an amine, ammonia, guanidine, antimony, lead, aluminium, iron or a metal of Groups IA, IIA, IB or IIB of the Periodic Table of Elements or a mixture thereof.

## Revendications

1. Composition appropriée pour former une fibre élastomère, qui comprend:

(a) un solvant mixte formé de 60 à 98% en poids d'un solvant aromatique et 2 à 40% en poids d'un alcool miscible au solvant aromatique et

(b) un terpolymère EPDM sulfoné neutralisé présentant 1 à 10,0% en poids d'insaturation oléfinique et une viscosité Mooney, à 100°C, de 5 à 60, le terpolymère sulfoné neutralisé contenant 10 à 50 méq. de groupes sulfonate par 100 g de terpolymère EPDM sulfoné neutralisé, dans lequel au moins 95% des groupes sulfonate sont neutralisés par un corps basique qui est une amine, un composé d'ammonium, la guanidine ou qui contient un cation de fer, d'aluminium, d'antimoine, de plomb ou d'un métal des groupes IA, IIA, IB ou IIB de la Classification Périodique des Eléments ou un mélange de ceux-ci, ce terpolymère sulfoné neutralisé étant dissous dans le solvant mixte à un taux de concentration de 5 à 50 g par 100 ml dudit solvant mixte pour former une solution, cette solution ayant une viscosité Brookfield, à 6 tours/mn à la température ambiante, de 2 à 50 Pa.s.

2. Composition selon la revendication 1, qui comprend un plastifiant ionique à un taux de concentration d'au moins 3 parties en poids par 100 parties en poids du terpolymère EPDM sulfoné neutralisé.

12

3. Composition selon l'une des revendications 1 ou 2, qui comprend un additif à un taux de concentration de moins de 60 parties en poids par 100 parties en poids du terpolymère EPDM sulfoné neutralisé et dans laquelle ledit additif est un hydroxyde métallique, une charge, une cire, une huile, un pigment, un stabilisant ou un mélange de ceux-ci, à condition que ledit additif n'est pas un plastifiant préférentiel.

4. Composition selon la revendication 3, caractérisée en ce que l'additif est une huile, une cire, une charge, un pigment, un hydroxyde métallique, un stabilisant ou un mélange de ceux-ci.

5. Composition selon l'une quelconque des revendications 1 à 4, caractérisée en ce que le constituant alcool du solvant est un alcool aliphatique ou cycloaliphatique.

6. Composition selon l'une quelconque des revendications 1 à 5, caractérisée en ce que le solvant aromatique est un hydrocarbure aromatique.

7. Procédé de formation d'une fibre en faisant passer une solution à travers une filière présentant de multiples orifices, caractérisé en ce que ladite solution est la composition selon l'une quelconque des revendications 1 à 6.

8. Procédé selon la revendication 7, caractérisé en ce que la viscosité de la solution est de 5 à 25 Pa.s.

9. Fibre élastomère ayant une ténacité d'au moins 0,12 g/denier qui comprend un terpolymère EPDM sulfoné contenant 10 à 50 méq. de groupes sulfonate par 100 g du polymère élastomère sulfoné, au moins 95% des groupes sulfonate étant neutralisés par une amine, l'ammoniac, la guanidine, l'antimoine, le plomb, l'aluminium, le fer ou un métal des groupes IA, IIA, IB ou IIB de la Classification Périodique des Eléments ou un mélange de ceux-ci.

## Patentansprüche

1. Zur Ausbildung einer elastomeren Faser geeignete Zusammensetzung gekennzeichnet durch

a) ein Mischlösungsmittel aus 60 bis 98 Gew% eines aromatischen Lösungsmittels und 2 bis 40 Gew.% eines mit dem aromatischen Lösungsmittel mischbaren Alkohols und

b) ein neutralisiertes sulfoniertes EPDM—Terpolymer mit 1 bis 10 Gew.% olefinischer Ungesättigheit und einer Mooney-Viskosität bei 100°C von 5 bis 60 sowie mit 10 bis 50 Milliäquivalenten Sulfonatgruppen je 100 g des neutralisierten sulfonierten EPDM, wobei mindestens 95% der Sulfonatgruppen mit einem basischen Material neutralisiert sind, welches ein Amin, eine Ammoniumverbindung oder Guanidin ist oder ein Kation aus der Gruppe bestehend aus Eisen, Aluminium, Antimon, Blei oder einem Metall der Gruppen IA, IIA, IB oder IIB des periodischen Systems der Elemente oder eine Mischung derselben enthält,

wobei das neutralisierte sulfonierte Terpolymer in dem Mischlösungsmittel in einer Konzentration von 5 bis 50 g je 100 ml des Mischlösungsmittels unter Ausbildung einer Lösung gelöst ist und die Lösung eine Brookfield-Viskosität bei 6 U/min und Raumtemperatur von 2 bis 50 Pa.s (2000 bis 50000 cps) besitzt.

2. Zusammensetzung nach Anspruch 1, dadurch gekennzeichnet, daß sie einen ionischen Weichmacher in einer Konzentration von mindestens 3 Gewichtsteilen je 100 Gewichtsteile des neutralisierten sulfonierten EPDM enthält.

3. Zusammensetzung nach jedem der vorangegangenen Ansprüche, dadurch gekennzeichnet, daß sie ein Additiv in einer Konzentration von weniger als 60 Gewichtsteilen je 100 Gewichtsteile des neutralisierten sulfonierten EPDM enthält, wobei das Additiv ein Metallhydroxid, ein Füllstoff, ein Wachs, ein Öl, ein Pigment, ein Stabilisierungsmittel oder eine Mischung derselben ist, vorausgesetzt, das Additiv ist nicht ein bevorzugter Weichmacher.

4. Zusammensetzung nach Anspruch 3, dadurch gekennzeichnet, daß das Additiv ein Öl Wachs, Füllstoff, Pigment, Metallhydroxid, Stabilisierungsmittel oder eine Mischung derselben ist.

5. Zusammenensetzung nach jedem der vorangegangenen Ansprüche, dadurch gekennzeichnet, daß die Alkoholkomponente des Lösungsmittels ein aliphatischer oder cycloaliphatischer Alkohol ist.

6. Zusammensetzung nach jedem der vorangegangenen Ansprüche, dadurch gekennzeichnet, daß das aromatische Lösungsmittel ein aromatischer Kohlenwasserstoff ist.

7. Verfahren zur Herstellung einer Faser durch Durchleiten einer Lösung durch eine Spinndüse mit einer Vielzahl von Düsenöffnungen, dadurch gekennzeichnet, daß die Lösung eine Zusammensetzung gemäß einem der Ansprüche 1 bis 6 ist.

8. Verfahren nach Anspruch 7, dadurch gekennzeichnet, daß die Viskosität der Lösung 5 bis 25 Pa.s (5000 bis 25000 cps) beträgt.

9. Elastomere Faser mit einer Festigkeit von mindestens 0,12 g/Denier gekennzeichnet durch ein sulfoniertes EPDM—Terpolymer mit 10 bis 50 Milliäquivalenten Sulfonatgruppen je 100 g des sulfonierten elastomeren Polymers, von denen mindestens 95% mit einem Amin, Ammoniak, Guanidin, Antimon, Blei, Aluminium, Eisen oder einem Metall der Gruppen IA, IIA, IB oder IIB des periodischen Systems der Elemente oder einer Mischung derselben neutralisiert sind.